# EUROPEAN PATENT APPLICATION

(11) **EP 2 161 921 A1**
(43) Date of publication of application: **10.03.2010**
(21) Application number: 08305529.3
(22) Date of filing: 05.09.2008
(51) Int. Cl.: H04N 5/222

(54) **Timer circuit for a video camera**

(71) Applicant: Thomson Licensing, 92443 Issy-les-Moulineaux Cedex (FR)
(72) Inventor: Kuppens, Chris, 4904 VK Oosterhout (NL); Hommel, John, 4681 BM Nieuw Vossemeer (NL); van der Horst, Giselaine, 4834 LR Breda (NL)
(74) Representative: Lindemann, Robert

(57) **Abstract**

A timer circuit for a video camera capable of generating a video signal having time code information associated to its frames comprises:
an input port for receiving an external serial digital time code signal (LTC external),
an interface circuit (10) for extracting from said time code signal (LTC) a phase signal (LTC-bit-phase-ext) synchronized to the bit frequency of said serial digital time code signal (LTC);
a phase-locked loop (9, 33, 35) controlled by said phase signal to deliver a pixel clock signal in synchronism with the phase signal.

## Description

The present invention relates to a timer circuit for a video camera capable of generating a video signal having time code information associated to each of its frames. A time code used for tagging frames of a video signal is described in e.g. in SMPTE standard draft 12M-1-200x. It is helpful to have time code data associated to frames of a video signal if an event is filmed by several cameras at the same time, and a program is produced by cutting and assembling sequences of frames from the recordings of the various cameras off-line. In order to switch from the signal of one camera to that of another, it is sufficient to find out the time code of the last frame of the sequence from said one camera, to determine what the time code of the next frame would be, and to retrieve a frame associated to this time code in the video signal from the other camera.

If a switchover between video signals of various cameras is to be carried out in real time, while an event is being filmed, a strict synchronization of horizontal and vertical frame times of the cameras is necessary to avoid noticeable timing jumps in the combined video signal.

Normally, when the system timing and an internal time code generator of a video camera must be synchronized to an external reference, two cables are used, one for transmitting the time code data and the other for transmitting a timing reference. The timing reference can be a black burst signal (a Standard Definition analog signal without video content), a SDI signal (270 Mbit/s standard serial digital video) or a HD-SDI signal (1.485 Gbit/s standard High Definition serial digital video).
This requires expensive interfacing circuitry and makes synchronization of cameras laborious and failure-prone.

The object of the present invention is to provide a timer circuit for a video camera which allows to synchronize a plurality of cameras with reduced effort and at reduced cost.

This object is achieved by a timer circuit for a video camera capable of generating a video signal having time code information associated to its frames, the circuit comprising:
an input port for receiving an external serial digital time code signal, an bit phase extraction circuit for extracting from said time code signal a phase signal synchronized to the bit frequency of said serial digital time code signal; and a phase-locked loop controlled by said phase signal to deliver a pixel clock signal in synchronism with the phase signal.

A signal format conventionally used for transmitting time code information is SMPTE LTC (Linear Time Code). This signal format uses a data block of 80 bits evenly distributed in time over one frame (or over two frames in case of 720 lines 50 Hz or 720 lines 60 Hz video signals). Between every two bits, the LTC signal level toggles. This toggling will be referred to in the following as an inter-bit transition. Depending on the value of the transmitted bit, the LTC signal will toggle or not toggle in the middle of the time period associated to that bit. This toggling will also be referred to as an in-bit transition. In order to extract the LTC bit clock from the LTC signal (or another signal using a similar type of encoding) the bit phase extraction circuit advantageously comprises a monoflop triggered by a level transition of the external time code signal, the duration of the unstable state of the monoflop being more than half of the bit period and less than the bit period of the time code signal. If the monoflop is triggered by an in-bit transition, it cannot be triggered by the following inter-bit transition, but if the following bit period has no in-bit transition, then it will be retriggered by the second next inter-bit transition. Once the monoflop has been triggered by an inter-bit transition, it cannot be re-triggered by an in-bit transition, and its output signal becomes periodic at the bit period.

In order to facilitate subsequent processing, the timer circuit may comprise logic circuitry for converting each inter-bit transition into a level transition of a same predetermined type, i.e. into either only a rising edge or only a falling edge.

This conversion may be achieved asynchronously by means of a sampling circuit triggered by a level transition of the external time code signal for sampling the external time code signal at a time in the latter half of a bit period and an XOR gate which receives the external time code signal and the output of the sampling circuit.

The above sampling technique allows for a highly precise detection of inter-bit transition times, but requires a priori knowledge of when the latter half of a bit period is. This knowledge may be obtained by coarse detection of a previous transition, preferably by means of a clocked two-bit shift register and an XOR gate connected to the two bits of the register.

In order to enable a camera which uses the timer circuit of the invention to operate autonomously, without access to the external serial digital time code signal, the timer circuit should comprise a generator for an internal serial digital time code signal.

If this internal time code generator is adapted to be synchronized to the external time code signal, it can maintain synchronized operation of the camera at times when reception quality of the external time code signal is bad.

In order to enable such a synchronization, the internal time code generator preferably comprises a register for time code data to be included in the internal serial digital time code signal and means for copying a time code from the external time code signal into said register.

In order to ensure that a data block of the external serial digital time code signal and a data block of the internal serial digital time code signal that overlap in time comprise the same time code information there may be provided a register for time code data to be included in the internal serial digital time code signal and means for copying a time code from the external time code signal into said register.

In order to achieve synchronization not only between bits of the external and internal time code signals but also between blocks of these, the generator preferably comprises a line counter and means for setting the line counter to a predetermined value upon detection of a predefined synchronizing bit pattern in the external serial digital time code signal.

The generator for the internal time code signal preferably comprises a frequency divider connected to the pixel clock signal for deriving a clock signal at the bit frequency of the internal time code signal and wherein the phase-locked loop comprises a phase comparator for comparing phases of said clock signal and said phase signal. In this way the frequency of the pixel clock signal can be made a multiple of the bit frequency of the internal time code signal, and small deviations between the phases of the internal and external time code signals can be easily detected and compensated.

Further features and advantages of the present invention will become apparent from the subsequent description of its preferred embodiments, referring to the appended drawings, in which:
- Fig. 1: is a block diagram of a system of synchronized cameras according to the present invention;
- Fig. 2: is a block diagram of a timer circuit used in each camera of Fig. 1;
- Fig. 3: is a block diagram of the bit-phase extraction circuit of Fig. 2; and
- Fig. 4: is a timing diagram of signals in the bit-phase extraction circuit of Fig. 3.

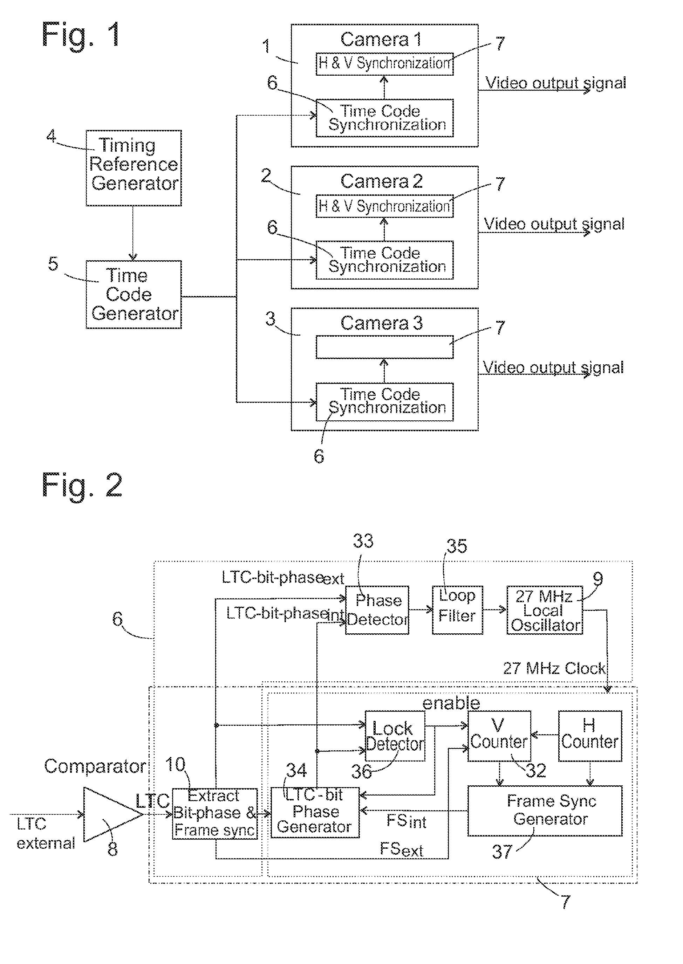

Fig. 1 shows a block diagram of a camera system comprising multiple cameras 1, 2, 3 for filming a same event. Each camera provides a digital video output signal, which may be recorded on a mass storage, not shown, for later processing, or which may be processed and broadcast in real time.

A central station, which may be a mixer receiving the video output signals from the various cameras 1-3, comprises a timing reference generator 4 for providing, in digital form, time-of-day information or time information relative to some arbitrary reference instant to a time code generator 5. The time code generator transforms the time information from the reference generator 4 into a binary, serial digital time code signal conforming with the SMPTE LTC standard.

This digital time code signal is organized in blocks of 80 bits which are generated at a rate of one block per every one or two frames of the video output signal of each camera, the number of frames per block depending on the line number of the video output signal. Each block has 64 payload bits encoding, among other things, the time-of-day to the second and the number of the associated video frame within the second, and a synchronization word occupying the last sixteen bits of each block.

Based on the time code information stored in association with each video frame, simultaneous frames from the video output signals of the various cameras can be easily retrieved when cutting the recordings off-line, and consecutive frames from output signals of different cameras can be spliced one behind the other. In order to avoid noticeable discontinuities in the cut program, synchronization of the cameras must be exact to a small fraction of the frame period.

Real time processing generally involves choosing among the output signals of the cameras 1-3 the one which is to be broadcast. In order to avoid a noticeable discontinuity when the broadcast signal is switched over from one camera to the other, the horizontal and vertical scan times of the cameras must be closely synchronized.

The cameras 1-3 achieve this synchronization by means of a two-stage synchronization interface comprising a time code synchronization stage 6 for extracting from the LTC signal transmitted by time code generator 5, the time code information and a bit clock signal, and a horizontal and vertical synchronization stage 7 for generating horizontal and vertical synchronization signals in synchronism with the regenerated bit clock signal. This synchronization interface is shown in more detail in Fig. 2.

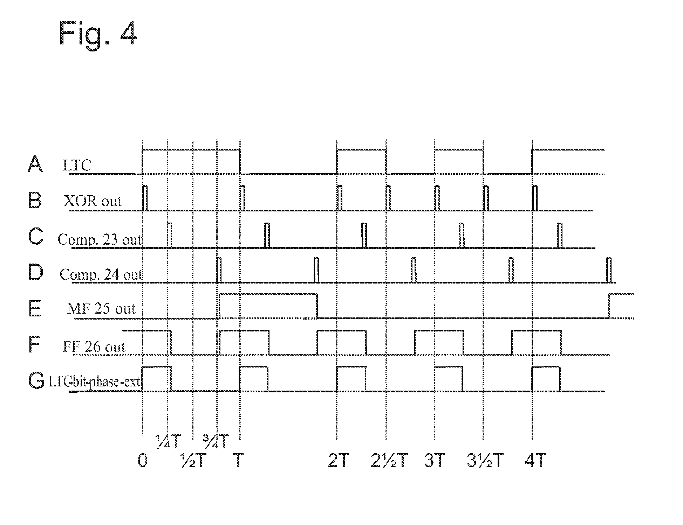

In Fig. 2, dotted outlines enclose components of time code synchronization stage 6 and HV synchronization stage 7. A dash-dot outline surrounds components of stages 6 and 7 which may be integrated in a same programmable logic device such as a field programmable logic array, the other components being readily available as such on the market. A comparator 8 is provided at the input of the synchronization interface in order to re-shape the time code signal to binary signal levels which can be processed reliably in subsequent stages 6 and 7. An exemplary waveform of re-shaped time code signal LTC is shown in Fig. 4A: In a first bit period, from t=0 to T, the transmitted bit is "0", and the level of the LTC signal is low. At t=T, the LTC level goes high. In a second bit period, the transmitted bit is again "0", the level stays high until t=2T. The next two bits are "1", so the level toggles at t=2.5T, t=3T, t=3.5T and so on.

A local oscillator 9 provides a clock signal to stages 6 and 7 which is tunable in a frequency interval around 27 MHz by a PLL loop, the structure and function of which will be explained in detail later.

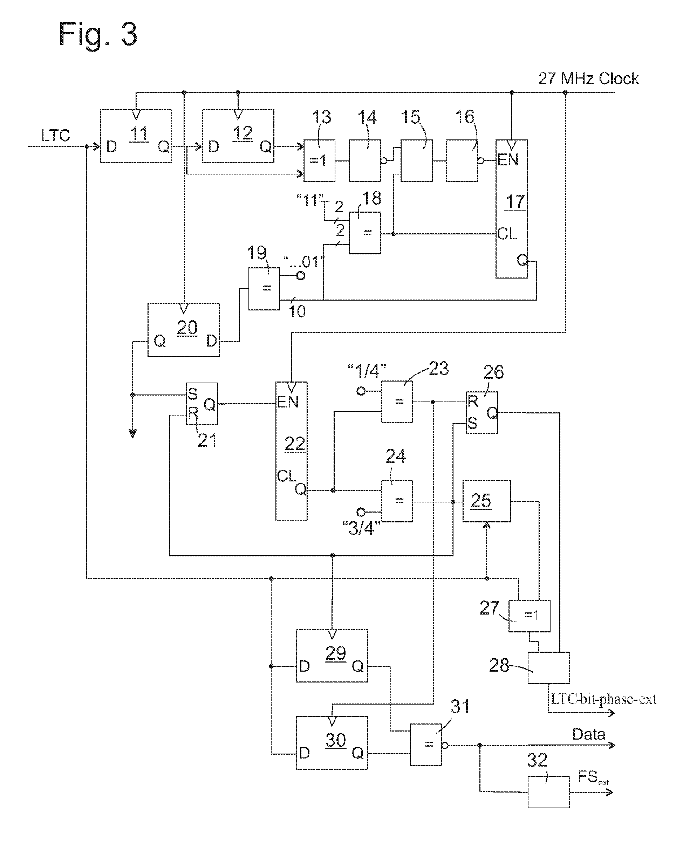

The re-shaped time code signal LTC from comparator 8 is received by a bit phase extraction circuit 10, the structure of which is shown in detail in Fig. 3. It comprises two D flipflops 11, 12, connected in series to form a shift register, clocked by the 27 MHz clock signal from oscillator 9. An XOR gate 13 is connected to the outputs of the D flipflops 11, 12. Its output is zero whenever the outputs of the D flipflops 11, 12 are identical, and is one whenever they are different. I.e. XOR gate 13 outputs a pulse whenever the re-shaped time code signal LTC toggles. This output signal is shown in Fig. 4B. While LTC and the clock are not strictly synchronized, there is a random delay between the rising or falling flank of LTC and the pulse of between 0 and 1/27 µs.

Inverters 14, 16 are provided between the output of XOR gate and an input of AND gate 15, and between the output of AND gate 15 and a clock enable input EN of a digital counter 17. A second input of AND gate 15 is connected to the output of a two-bit equivalence comparator 18, which receives as first input data the two most significant bits of the counting value of counter 17 and as a second input data constant bits "11".

A second equivalence comparator 19 having a width of e.g. ten bits is connected to a counting value output of counter 17 and to a constant ten bit input value "1", i.e. an input value having 1 in its least significant bit and zero in all other bits. An output of comparator 19 is connected to a data input of a further D flipflop 20.

When the clock enable input EN of counter 17 is low, it does not react to the 27 MHz clock signal, and an output value "11 0000 0000" is frozen at its output, and comparator 18 outputs "1". Under these circumstances, the signal at the EN output is equal to the output of XOR gate 13, i.e. it is zero while no flank is detected in the time code signal. When there is a flank in the time code signal, XOR gate outputs "1", the output of AND gate 15 switches to "0", and counter 17 becomes enabled. It reacts to the clear signal "1" at its CL input, sets the counting value to 0 and starts counting clock pulses.

When the counting value is "00 0000 0001", D-flipflop 20 is set, and it is reset immediately afterwards, when the counting value becomes "00 0000 0010". Flipflop 20 thus outputs a pulse with a duration of one clock cycle when a flank was detected in the time code signal.

While the counting value is less than "11 0000 0000", comparator 18 outputs "0", keeping the output of AND gate 15 at "0" and the clock enable input EN at "1". In this time, the circuit will not react to other falling or rising flanks in the time code signal. I.e. the counter 17 cannot be retriggered for 768/27 µs. This time is much shorter than half a bit period of the LTC signal, i.e. the above circuit design is effective to eliminate spurious transitions in the LTC signal.

When counter 17 reaches the counting value 768="11 000 000", comparator 18 outputs "1". If no flank was detected at the same instant, inverter 14 outputs "1", and the output of AND gate 15 switches to "1". EN becomes zero, and the state of the counter 17 is frozen. It is now ready to be triggered again.

The output of D flipflop 20 sets a RS flipflop 21 which, in turn, controls clock enable input EN of a second counter 22. The second counter is thus triggered to count clock pulses by the pulse from D flipflop 20. The width of this second counter 22 is sufficient to count over more than three quarters of the bit period T of the LTC signal. In order to simplify the description, it will be assumed that the counting range of counter 22 is equivalent to one bit period T. Counter 22 has two equivalence comparators 23, 24 connected to its data output Q. Comparator 23 compares the counting value of counter 22 to a binary value corresponding to one quarter of the bit period, comparator 24 compares it to a binary value corresponding to three quarters of the bit period. The output of comparator 24 is fed back to the reset input of RS flipflop 21, so as to disable the counter when three quarters of a bit period have passed since it was triggered. The counter 22, the comparator 24 and the RS flipflop 21 thus combine to form a non-retriggerable monoflop, the unstable state of which lasts ¾ of a bit period.

In a steady state of bit phase extraction circuit 10, the output signals of equivalence comparators 23, 24 are as shown in Fig. 4C and D, respectively. If, in a non-steady state, counter 22 is triggered by a flank of the LTC signal at a time t= (n+1/2)T, is cannot be retriggered by the flank at t= (n+1)T. If the bit transmitted from t= (n+1)T to t=(n+2)T is "0", the next triggering flank is at t=(n+2)T, and the circuit will reach the steady state.

The LTC signal enables a monoflop 25 to be triggered by the output pulse of comparator 24. I.e. monoflop 25 is triggered if at the time of the output pulse from comparator 24, the LTC signal is "1". The duration of the unstable state of monoflop 25 is approximately T, as shown in Fig. 4E.

A RS flipflop 26 is set by an output pulse from comparator 24 and is reset by a pulse from comparator 23. It thus outputs the waveform shown in Fig. 4F, an alternating waveform with a duty cycle of approx. 50% which is "1" around t=nT and "0" around t=(n+1/2)T.

An XOR gate 27 receives the LTC signal and the output of monoflop 25. The output of XOR gate is an alternating signal having a pulse duration of either approx. 1/4 T or 3/4 T, the rising flanks of which reproduce exactly the bit clock of the LTC signal. By ANDing this signal with the output of RS flipflop 26 in AND gate 28, the signal shown in Fig. 4G is obtained, in which the pulses have a constant duration of approx. 1/4 T.

For the bit-phase regeneration process described above, synchronism between local oscillator 9 and an external oscillator which controls the generation of the LTC external signal applied to comparator 8 need not be precise, deviations of several percent can be easily tolerated.

Referring again to Fig. 2, the output signal of AND gate 28, referred to as LTC-bit-phaseₑₓₜ is supplied to one input of a phase comparator 33, the other input of which receives a phase signal LTC-bit-phaseᵢₙₜ from an internal LTC bit-phase generator 34 of the camera. Via loop filter 35, a signal representative of the phase difference between LTC-bit-phaseₑₓₜ and LTC-bit-phaseₑₓₜ controls the frequency of local oscillator 9. In this way, the synchronism between local oscillator 9 and the external oscillator can be made as exact as necessary for cutting and camera switching. In a conventional way, the clock signal from local oscillator 9 is a master clock for the camera, on which the operation of horizontal and vertical counters and, finally, generation of video frames are based.

Synchronism is detected by lock detector 36, known as such, which outputs an enable signal if in a series of a predetermined number of consecutive pulses of LTC-bit-phaseₑₓₜ and LTC-bit-phaseᵢₙₜ the delay between rising flanks of the two signals has not exceeded a given threshold. If lock detector 36 finds the two bit-phase signal to be synchronous, it enables vertical (line) counter 32 of the camera, so that video frames can be generated. Lock detector 36 will be satisfied that there is synchronism if the LTC phase signals are matched on a bit-by-bit basis, but it can not tell whether LTC data blocks of LTC external and from the internal LTC bit-phase generator 34 are matched.

Referring once more to Fig. 3, the LTC signal is decoded by D flipflops 29, 30 and an NXOR gate 31. D flipflops 29, 30 have their data inputs connected to the LTC signal and are triggered by comparators 23, 24, respectively, so as to sample LTC in the first and second half of its bit period. Data outputs of D flipflops 29, 30 are connected to XOR gate 31. At t=nT, NXOR gate outputs 1 if the bit transmitted from t=(n-1)T to t=nT was "1", and it outputs "0" if the bit was "0". A pattern recognition circuit 32 monitors the decoded LTC data signal DATA for the occurrence of the synchronization bit pattern, and when it detects it, it outputs a synchronization signal FSₑₓₜ to vertical counter 32, whereby the line count value in counter 32 is set to 1. In this way, phase matching of LTC data blocks, and, hence, of entire video frames, is ensured.

The DATA signal is directly connected to internal LTC bit-phase generator 34, enabling phase detector 34, when lock detector 36 starts outputting the enable signal, to overwrite time code data in an internal register with those encoded in DATA and to output these in association with the next video frame generated by the camera. Upon generation of a video frame, time code data in the register of generator 34 are updated based on a trigger pulse FSᵢₙₜ from frame sync generator 37, so that properly synchronized frames with correct time code information associated to them continue to be output by the camera, even if the connection to external time code generator 5 id interrupted.

## Claims

1. A timer circuit for a video camera capable of generating a video signal having time code information associated to its frames, the circuit comprising:
an input port for receiving an external digital time code signal (LTC external),
a bit phase extraction circuit (10) for extracting from said time code signal (LTC) a phase signal (LTC-bit-phase-ext) synchronized to the bit frequency of said digital time code signal (LTC);
a phase-locked loop (9, 33, 35) controlled by said phase signal to deliver a pixel clock signal in synchronism with the phase signal.

2. The timer circuit of claim 1, wherein the bit phase extraction circuit (10) comprises a monoflop (22, 24) triggered by a level transition of the external time code signal, the duration of the unstable state of the monoflop (22, 24) being longer than half of the bit period (T) and shorter than the bit period (T) of the time code signal (LTC).

3. The timer circuit of any of the preceding claims, wherein the time code signal (LTC) has arbitrary level transitions between two consecutive bit periods, the circuit further comprising logic circuitry (11, 12; 11-20; 11-28) for converting each arbitrary level transition into a level transition of a same predetermined type.

4. The timer circuit of claim 3, wherein the logic circuitry comprises a sampling circuit (25) triggered by a level transition of the external time code signal (LTC) for sampling the external time code signal (LTC) at a time in the latter half of a bit period and an XOR gate (27) which receives the external time code signal (LTC) and the output of the sampling circuit (25).

5. The timer circuit of any of the preceding claims, further comprising a clocked two-bit shift register (11, 12) and an XOR gate (13) connected to the two bits (11; 12) of the register.

6. The timer circuit of any of the preceding claims, further comprising a generator (34) for an internal digital time code signal.

7. The timer circuit of claim 6, wherein the generator (34) comprises a register for time code data to be included in the internal digital time code signal and means for copying a time code from the external time code signal into said register.

8. The timer circuit of claim 6 or 7, wherein the generator (34) comprises a line counter and means for setting the line counter to a predetermined value upon detection of a predefined bit pattern in the external digital time code signal.

9. The timer circuit of claim 6, 7 or 8, wherein the generator for the internal time code signal comprises a frequency divider connected to the pixel clock signal for deriving a clock signal at the bit frequency of the internal time code signal and wherein the phase-locked loop comprises a phase comparator for comparing phases of said clock signal and said phase signal.

10. A video camera comprising the timer circuit of any of the preceding claims.
